# EUROPEAN PATENT APPLICATION

(11) **EP 2 884 446 A1**
(43) Date of publication of application: **17.06.2015**
(21) Application number: 14190255.1
(22) Date of filing: 24.10.2014
(51) Int. Cl.: G06Q 30/02

(54) **Information providing device, method, and system**

(30) Priority: 13.12.2013 JP 2013258539
(71) Applicant: FUJITSU LIMITED, Kawasaki-shi, Kanagawa 211-8588 (JP)
(72) Inventor: Watanabe, Yuki, Kanagawa, 211-8588 (JP)
(74) Representative: Hoffmann Eitle

(57) **Abstract**

An information providing device includes a storage device configured to store display information associated with identification information for identifying a reference object; and an information providing unit configured to receive, from a terminal, a request including the identification information and information on position recognition, and cause the terminal to download, from the storage device, display information identified by the information on position recognition specified in the request, from among display information corresponding to the identification information specified in the request, in response to receiving the request.

## Description

### FIELD

The embodiments discussed herein are related to an information providing device.

### BACKGROUND

There is a service of providing information according to the recognition of a marker by a terminal of the user. In this service, information according to the position where a marker is arranged, is provided from a server. Furthermore, information provided according to the recognition of a marker is also uploaded from the terminal of the user to a server.

There is known a technology for providing information relevant to a position, in which positioning information, which is acquired from two or more positioning devices such as GPS (Global Positioning System) and RFID (Radio Frequency IDentification), is received from a terminal. Accordingly, the state transition to a location on a map, which is positioned according to the received positioning information, is determined from immediately prior history, and the location is reliably applied on map information of indoors and outdoors. Thus, an accurate map is displayed on a moving body terminal device while preventing confusion in the positioning results of indoors and outdoors.

Furthermore, there is proposed a technology of providing map information by applying requests from a user, while making switching determinations of a positioning unit, based on an area where positioning is possible stored in advance.
Patent Document 1: Japanese Laid-Open Patent Publication No. 2007-121226
Patent Document 2: Japanese Laid-Open Patent Publication No. 2012-145482

The above conventional technologies are for providing map information by the granularity level of information according to the positioning unit. Therefore, even when different users want to acquire different kinds of information, the same information is provided, if the positioning unit is the same.

### SUMMARY

In the above conventional technologies, it has not been possible to provide information in accordance with the status of the user when acquiring information.

Accordingly, it is an object in one aspect of the invention to provide information in accordance with the user's status, even for the same reference object.

According to an aspect of the embodiments, an information providing device includes a storage device configured to store display information associated with identification information for identifying a reference object; and an information providing unit configured to receive, from a terminal, a request including the identification information and information on position recognition, and cause the terminal to download, from the storage device, display information identified by the information on position recognition specified in the request, from among display information corresponding to the identification information specified in the request, in response to receiving the request.

### BRIEF DESCRIPTION OF THE DRAWINGS

FIG. 1 illustrates an association example of the purpose of acquiring information and a position recognition method;
FIGS. 2A and 2B illustrate examples of superposed displays in the status A of FIG. 1;
FIGS. 3A through 3C illustrate examples of superposed displays in the status B of FIG. 1;
FIGS. 4A through 4C illustrate examples of superposed displays in the status C of FIG. 1;
FIG. 5 illustrates an overall configuration example of an information providing system;
FIG. 6 illustrates a hardware configuration of a terminal;
FIG. 7 illustrates a hardware configuration of a server device;
FIG. 8 illustrates a functional configuration example of the terminal;
FIG. 9 illustrates a function configuration example of the server device;
FIG. 10 illustrates a data configuration example of a scenario table;
FIG. 11 illustrates a data configuration example of a superposition information definition table;
FIG. 12 is a flowchart of an information superposition process by the terminal;
FIG. 13 is a flowchart of an AR superposition display process performed at step S54 of FIG. 12;
FIG. 14 is a flowchart of an information providing process performed by the server device;
FIG. 15 illustrates an example of a case where a marker at the entrance of a building is detected; and
FIG. 16 illustrates an example of a case where a marker attached to a box is detected.

### DESCRIPTION OF EMBODIMENTS

Preferred embodiments of the present invention will be explained with reference to accompanying drawings. There is a service for providing information in accordance with a recognized reference object, when a reference object such as a marker is recognized with the terminal of a user. An example of this kind of service, there is a technology referred to as AR (Augmented Reality).

By the technology of AR, on a screen for displaying images taken by a camera, it is possible to display a 3D model created by CAD (Computer-Aided Design), as if the 3D model is a space taken by a camera. In the following description, recognition of a marker is given as an example; however, in the technology of AR, recognition of a marker and object recognition are included.

When AR is used, the user's terminal communicates with a server at the time point when a marker is recognized, downloads information associated with the reference object from the server, and displays the information on the screen.

The downloaded information is information (superposition information) that is superposed on an image (still image or video) taken by the terminal with the user of a camera. The information (superposition information) may be an image, character information, or audio data such as sound or music, or a combination of these.

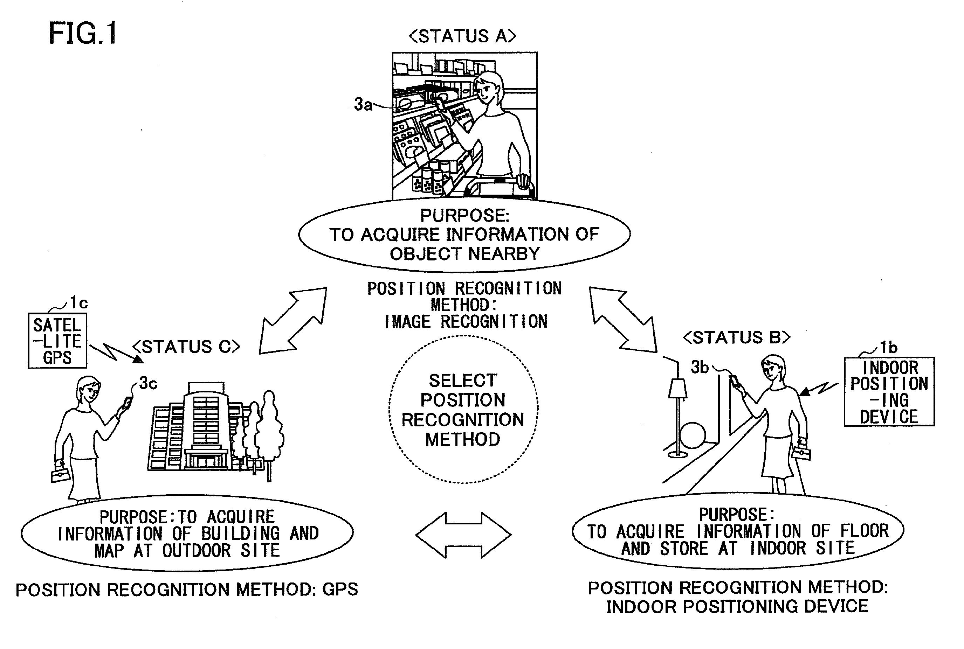

Even at the same position, the superposition information to be acquired by the user may be different according to the status of the user. The inventors considered that there is a relationship between the status of the user and the position recognition method of recognizing the position of the user. FIG. 1 illustrates an association example of the purpose of acquiring the information and the position recognition method.

Status A indicates a status where the user wants to acquire information of an object that is nearby. A marker in an image that is taken by the user with a terminal 3a is recognized, and superposition information corresponding to the recognized marker is preferably provided.

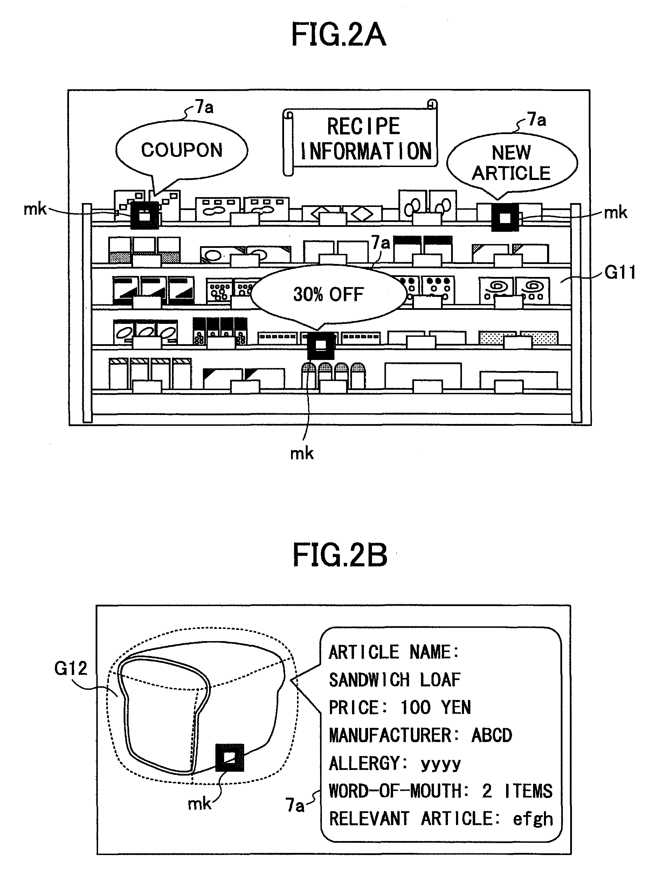

A nearby object may be articles displayed in a supermarket, exhibited artwork or craftwork. The superposition information provided in status A may be information relevant to the article such as the production region, the producer, and the price, or information relevant to artwork such as the country and the creator. FIGS. 2A and 2B illustrate examples of superposed displays in the statue A of FIG. 1.

In FIG. 2A, in status A, when the user takes an image of a display shelf with the terminal 3a, the terminal 3a acquires superposition information 7a by recognizing images of a plurality of markers mk in an image G11, and displays the superposition information 7a corresponding to the respective markers mk so as to be superposed on the image G11 that has been taken.

"Coupon", "new article", and "30% OFF" displayed in the image correspond to the superposition information 7a.

In FIG. 2B, in status A, when the user uses the terminal 3a to take an image of an article that he/she has held in his/her hand, or a specific article, the terminal 3a acquires the superposition information 7a by recognizing an image of a marker mk in an image G12, and displays the superposition information 7a so as to be superposed on the image G12 that has been taken.

The contents displayed on the screen "article name: sandwich loaf, price; 100 yen, manufacturer: ABCD, allergy: yyyy, word-of-mouth: 2 items, relevant article: efgh" correspond to the superposition information 7a.

Referring back to FIG. 1, a status B indicates a status where the user wants to acquire information of a floor or a store at an indoor site. Superposition information is preferably provided based on position information acquired by the terminal 3b of the user from an indoor positioning device 1b set indoors.

The indoor positioning device 1b is indoor GPS by an IMES (Indoor MEssaging System) method, or a wireless LAN (Local Area Network) access point, etc.

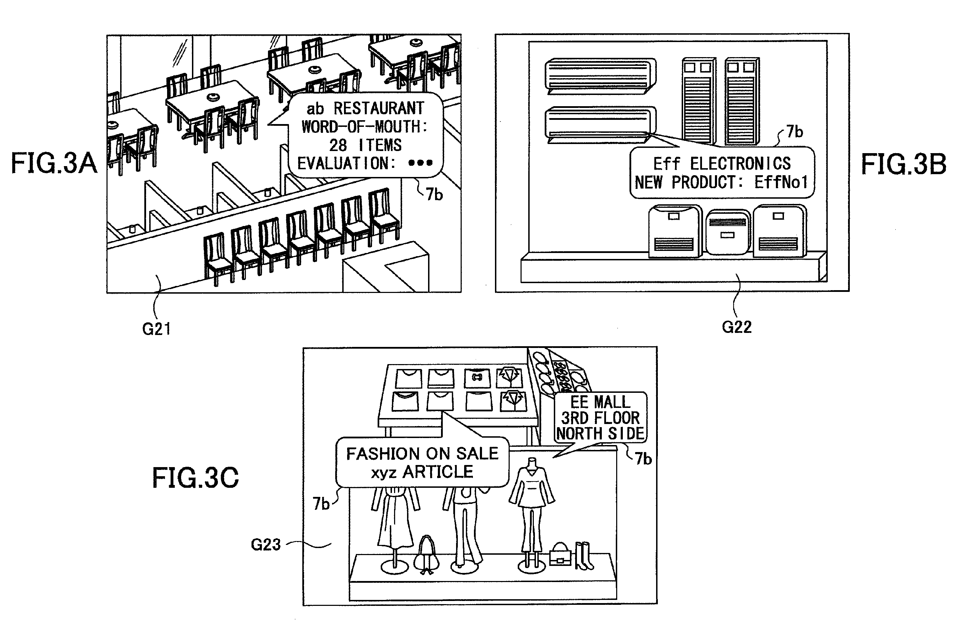

The superposition information provided in status B may be a floor map and the present position, the owner of the store, or information relevant to a flagship product. FIGS. 3A through 3C illustrate examples of superposed displays in the statue B of FIG. 1.

In FIG. 3A, in status B, a user at an indoor site takes an image of a restaurant with the terminal 3b and acquires an image G21. Then, the terminal 3b sends position information received from the indoor positioning device 1b to a server device. The server device provides superposition information 7b to the terminal 3b based on position information provided by the indoor positioning device 1b and sent from the terminal 3b.

As a result, on the terminal 3b, a screen is displayed, in which superposition information 7b downloaded from the server device is superposed on the image G21 that has been taken. The contents displayed on the screen "ab restaurant, word-of-mouth: 28 items, evaluation ●●●" correspond to the superposition information 7b.

In FIG. 3B, in status B, a user at an indoor site takes an image inside a store with the terminal 3b and acquires an image G22. Then, the terminal 3b sends position information received from the indoor positioning device 1b to a server device. The server device provides superposition information 7b to the terminal 3b based on position information provided by the indoor positioning device 1b and sent from the terminal 3b.

As a result, on the terminal 3b, a screen is displayed, in which superposition information 7b downloaded from the server device is superposed on the image G22 that has been taken. The contents displayed on the screen "Eff electronics, new product: EffNo1" correspond to the superposition information 7b.

In FIG. 3C, in status B, a user at an indoor site takes an image inside a store with the terminal 3b and acquires an image G23. Then, the terminal 3b sends position information received from the indoor positioning device 1b to a server device. The server device provides superposition information 7b to the terminal 3b based on position information provided by the indoor positioning device 1b and sent from the terminal 3b.

As a result, on the terminal 3b, a screen is displayed, in which superposition information 7b downloaded from the server device is superposed on the image G23 that has been taken. The contents displayed on the screen "fashion on sale xyz article", "EE mall 3rd floor north side" correspond to the superposition information 7b.

Referring back to FIG. 1, status C indicates a status where the user wants to acquire information of a building or a map at an outdoor site. Superposition information is preferably provided, which corresponds to the position information acquired by the terminal 3c of the user from a satellite GPS (Global Positioning System) 1c.

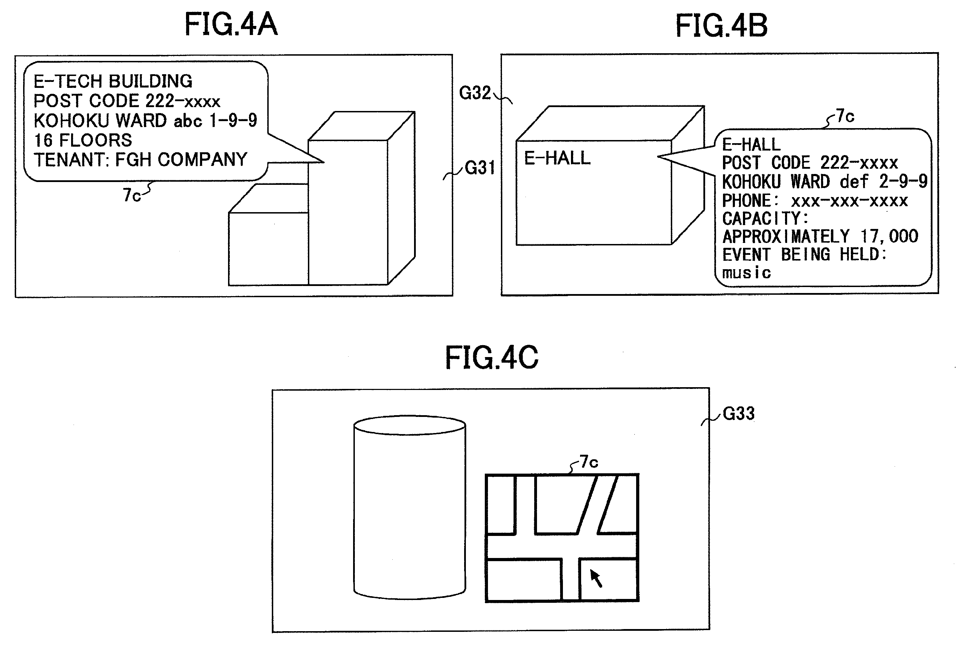

The superposition information provided in status C may be information relevant to a building such as the building name and the owner name, or map information including the present position. FIGS. 4A through 4C illustrate examples of superposed displays in the statue C of FIG. 1.

In FIG. 4A, in status C, a user at an outdoor site takes an image of a building with the terminal 3c and acquires an image G31. Then, the terminal 3c sends position information received from the satellite GPS 1c to a server device. The server device provides superposition information 7c to the terminal 3c based on position information provided by the satellite GPS 1c and sent from the terminal 3c.

As a result, on the terminal 3c, a screen is displayed, in which superposition information 7c downloaded from the server device is superposed on the image G31 that has been taken. The contents displayed on the screen "E-tech building, post code 222-xxxx, Kohoku ward abc 1-9-9, 16 floors, tenant: FGH company" correspond to the superposition information 7c.

In FIG. 4B, in status C, a user at an outdoor site takes an image of a building with the terminal 3c and acquires an image G32. Then, the terminal 3c sends position information received from the satellite GPS 1c to a server device. The server device provides superposition information 7c to the terminal 3c based on position information provided by the satellite GPS 1c and sent from the terminal 3c.

As a result, on the terminal 3c, a screen is displayed, in which superposition information 7c downloaded from the server device is superposed on the image G32 that has been taken. The contents displayed on the screen "E-hall, post code 222-xxxx, Kohoku ward def 2-9-9, Phone: xxx-xxx-xxxx, Capacity: approximately 17,000, Event being held: music" correspond to the superposition information 7c.

In FIG. 4C, in status C, a user at an outdoor site takes an image of a building with the terminal 3c and acquires an image G33. Then, the terminal 3c sends position information received from the satellite GPS 1c to a server device. The server device provides superposition information 7c to the terminal 3c based on position information provided by the satellite GPS 1c and sent from the terminal 3c.

As a result, on the terminal 3c, a screen is displayed, in which superposition information 7c downloaded from the server device is superposed on the image G33 that has been taken. The map image displayed on the screen corresponds to the superposition information 7c.

As described above, it is known that there is a relationship between the purpose of acquiring information by the user and the object, when providing superposition information, which corresponds to nearby objects that may be held in one's hand to objects such as buildings in the area surrounding the user.

Furthermore, the superposition information is provided in various granularity levels from an individual article (status A) to a map of an area surrounding the user (status C), and there are position recognition methods according to the respective granularity levels.

In status A, information of an object identified by the user by reading a marker mk, is provided as the superposition information 7a. In status B, by using position information of the indoor positioning device 1b, information relevant to a local area near the user is provided as the superposition information 7b. Furthermore, in status C, by using position information of the satellite GPS 1c, real estate information or a map of a building or land in an area surrounding the user that is larger than that of status B, is provided as the superposition information 7c.

That is to say, in status A, the information provided by using the marker mk has a low granularity level. Furthermore, in status B, the information provided by using the position information of the indoor positioning device 1b has a granularity level that is higher than the information provided by using the marker mk, but lower than the information provided by using the position information of the satellite GPS 1c. Furthermore, in status C, the information provided by using the position information of the satellite GPS 1c has a granularity level that is higher than the information provided by using the position information of the indoor positioning device 1b, and thus has the highest granularity level among status A, status B, and status C.

However, the superposition information 7a that is obtained from the same marker mk is limited to be the same information. Different kinds of information are preferably provided in accordance with the status A, B, or C of the user, even when the same marker mk is read.

In the present embodiment, as described above, by using the relationship between the granularity level and the position recognition method, even when the user has taken an image of the same marker, the granularity level is selected according to different position recognition methods, thus providing information in accordance with the status of the user intending to acquire the information. By managing the superposition information of different granularity levels for the respective position recognition methods, it is possible to provide information in accordance with the user's status.

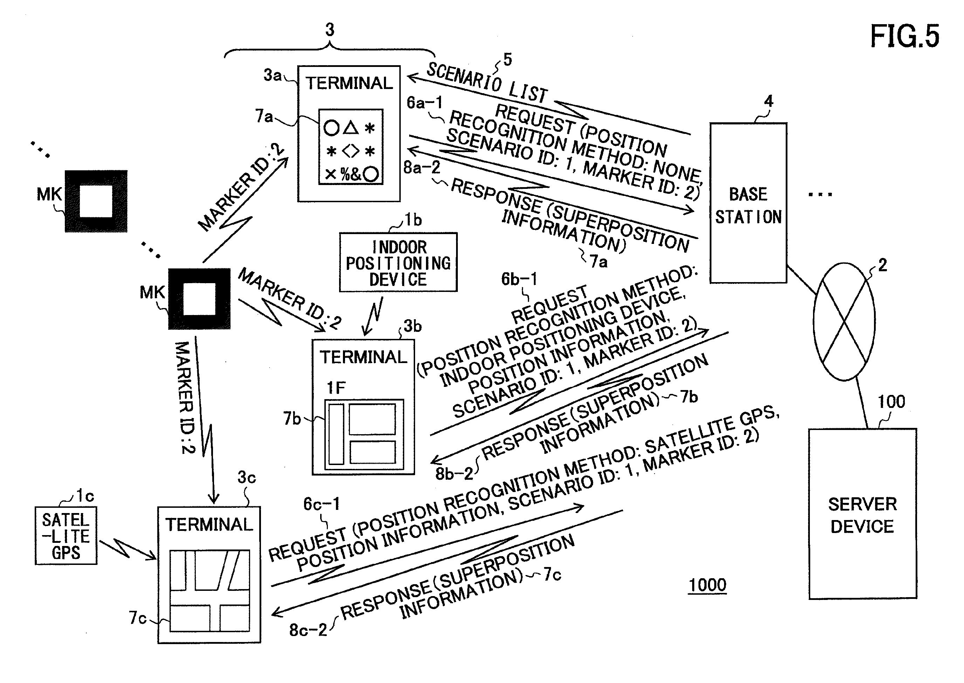

A description is given of an information providing system according to the present embodiment, with reference to FIG. 5. FIG. 5 illustrates an overall configuration example of an information providing system. An information providing system 1000 illustrated in FIG. 5 includes a server device 100, a plurality of terminals 3a, 3b, 3c (collectively referred to as terminal 3), a plurality of base stations 4, and a plurality of markers MK.

In FIG. 5, even when the terminals 3 of the respective users detect the same marker MK, the server device 100 , which corresponds to an information providing device, selectively downloads one information item among the superposition information 7a, 7b, or 7c, according to the status of each user. The respective terminals 3 display the superposition information 7a, 7b, or 7c downloaded from the server device 100 so as to be superposed on the screen displayed on the terminal 3.

The plurality of base stations 4 are connected to the server device 100 via the Internet 2. Furthermore, the plurality of terminals 3 are connected to the server device 100 from the base stations 4 via the Internet 2, by performing network communication with the base stations 4 in a wireless manner.

Each of the terminals 3 is a mobile type information processing terminal capable of performing communication. The terminal 3 is a mobile phone, a PDA (Personal Digital Assistant), etc., which supports a communication function for controlling network communication, and has a camera function. The camera function preferably includes a scanning function for scanning a two-dimensional barcode pattern. The communication function preferably includes a near field communication function performed by contact or non-contact wireless communication, in addition to a network communication function via the Internet 2.

The marker MK includes a marker ID for identifying the marker MK. The marker ID may be indicated by a two-dimensional barcode pattern scanned by the terminal 3. Alternatively, when the marker MK includes an IC chip capable of near field communication, the marker ID may be acquired from a memory in the marker MK by contact or non-contact wireless communication by the terminal 3. In this case, as the marker MK, an RF (Radio Frequency) tag including an IC (Integrated Circuit) tag is used.

The marker MK is recognized by image recognition, contact recognition, etc. In the present embodiment, the marker MK is provided for a reference object whose arrangement position is determined. By detecting the marker MK and acquiring the marker ID, it is possible to identify the arrangement position, i.e., the present position of the user, based on the marker ID.

A description is given of an overview of a superposition information acquisition process in a case where the terminal 3a acquires the superposition information 7a. The terminal 3a acquires a marker ID "2" from a marker MK by performing near field communication with the marker MK. Then, the terminal 3a sends a request 8a specifying the acquired marker ID "2", to the server device 100. The marker ID "2" is sent from the terminal 3a to the server device 100 via the base station 4 and the Internet 2.

In the present embodiment, for the same marker MK having the marker ID "2", different kinds of superposition information 7a, 7b, and 7c are provided from the server device 100, according to the purpose of acquiring information by the user. With reference to FIG. 5, a description is given of an overview according to the present embodiment, where the terminal 3a, the terminal 3b, and the terminal 3c detect the marker ID "2" from the same marker MK.

When the user of the terminal 3a starts an information superposition process according to the present embodiment, the terminal 3a acquires a scenario list 5 from the server device 100 via the base station 4 and the Internet 2. The information superposition process according to the present embodiment is started by activating an application according to the present embodiment.

With the terminal 3a, the user selects one scenario from the scenario list 5, selects a position recognition method, and then operates the terminal 3a to scan a marker ID "2" from the marker MK. It is assumed that in the terminal 3a, the scenario of scenario ID "1" is selected, and no positioning device is selected, by which a position recognition method is not used. Subsequently, when the terminal 3a detects the scanning of the marker ID "2", the terminal 3a sends a request 6a-1 specifying position recognition method "none", scenario ID "1", and marker ID "2", to the server device 100.

In response to the request 6a-1, the server device 100 sends a response 8a-2 to the terminal 3a, including the superposition information 7a corresponding to the information including position recognition method "none", scenario ID "1", and marker ID "2", which are specified in the request 6a-1.

When the response 8a-2 is received, the terminal 3a acquires the superposition information 7a from the response 8a-2, and displays the superposition information 7a so as to be superposed on the image displayed on the terminal 3a.

Next, a description is given of an overview of a superposition information superposition process by the terminals 3b and 3c. Also in the terminals 3b and 3c, it is assumed that the scenario list 5 has been acquired from the server device 100 and the scenario of the same scenario ID "1" has been selected.

In the terminal 3b, when use of the indoor positioning device 1b is selected and the marker ID "2" is selected, the terminal 3b sends a request 6b-1 specifying the indoor positioning device 1b, position information acquired from the indoor positioning device 1b, scenario ID "1", and marker ID "2", to the server device 100.

In response to the request 6b-1, the server device 100 sends a response 8b-2 to the terminal 3b, including the superposition information 7b corresponding to the information including position recognition method "indoor positioning device", scenario ID "1", and marker ID "2", which are specified in the request 6b-1.

When the response 8b-2 is received, the terminal 3b acquires the superposition information 7b from the response 8b-2, and displays the superposition information 7b so as to be superposed on the image displayed on the terminal 3b. The superposition information 7b is different from the superposition information 7a superposed in the terminal 3a.

In the terminal 3c, when use of the satellite GPS 1c is selected and the marker ID "2" is selected, the terminal 3c sends a request 6c-1 specifying the satellite GPS 1c, position information acquired from the satellite GPS 1c, scenario ID "1", and marker ID "2", to the server device 100.

In response to the request 6c-1, the server device 100 sends a response 8c-2 to the terminal 3c, including the superposition information 7c corresponding to the information including position recognition method "satellite GPS", scenario ID "1", and marker ID "2", which are specified in the request 6c-1.

When the response 8c-2 is received, the terminal 3c acquires the superposition information 7c from the response 8c-2, and displays the superposition information 7c so as to be superposed on the image displayed on the terminal 3c. The superposition information 7c is different from the superposition information 7a superposed in the terminal 3a and the superposition information 7b superposed in the terminal 3b.

As described above, even for the same scenario ID "1" and the same marker ID "2", one of the superposition information 7a, 7b, or 7c is provided, based on the positioning device selected by the user.

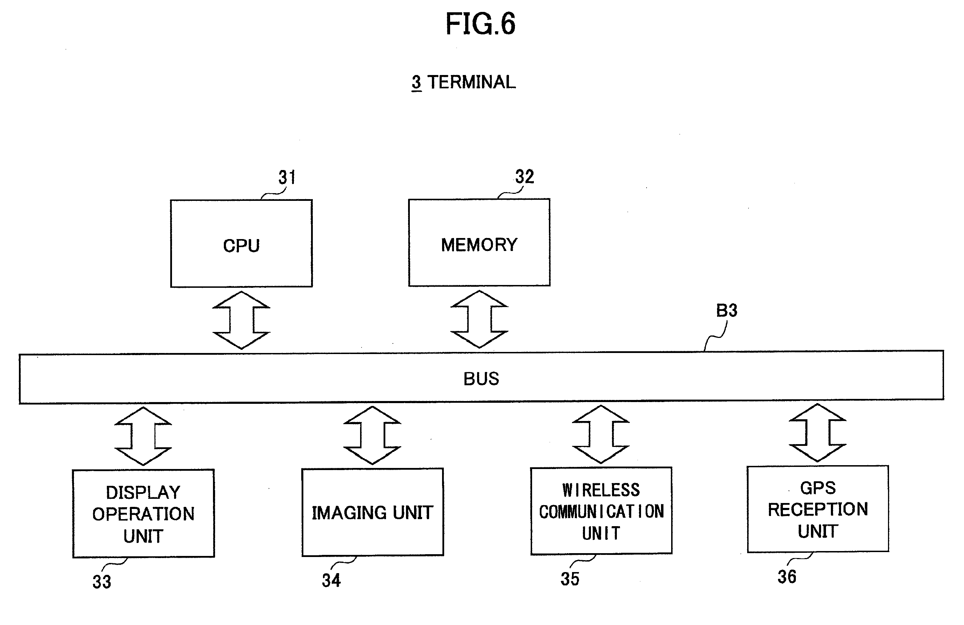

The terminal 3 according to the present embodiment has a hardware configuration as illustrated in FIG. 6. FIG. 6 illustrates a hardware configuration of the terminal 3. As illustrated in FIG. 6, the terminal 3 is a terminal controlled by a computer, and includes a CPU (Central Processing Unit) 31, a memory 32, a display operation unit 33, an imaging unit 34, a wireless communication unit 35, and a GPS reception unit 36, which are connected to a bus B3.

The CPU 31 is a processor that controls the terminal 3 according to programs stored in the memory 32. As the memory 32, a RAM (Random Access Memory) or a ROM (Read-Only Memory) is used, and the memory 32 stores or temporarily saves programs executed by the CPU 31, data needed for processes by the CPU 31, and data obtained by processes by the CPU 31.

The display operation unit 33 includes a display unit and an operation unit. The display operation unit 33 may be a touch panel in which the display unit and the operation unit are integrated as a single body. The display operation unit 33 displays various types of information needed according to control by the CPU 31, and also receives input of various types of information from the user.

The imaging unit 34 corresponds to a camera for taking a still image or a video. The image taken by the imaging unit 34 is displayed on the display operation unit 33. Furthermore, when the marker ID is indicated by a QR code (registered trademark), the imaging unit 34 is used as a reader for reading the QR code.

The wireless communication unit 35 performs network communication for communicating with the server device 100. Furthermore, the wireless communication unit 35 may have a near field communication function performed by contact or non-contact wireless communication. The GPS reception unit 36 receives position information from the indoor positioning device 1b or the satellite GPS 1c.

The programs for realizing the processes performed by the terminal 3 may be stored in advance in the memory 32 to be provided to the user when the terminal 3 is sold, or may become usable by being downloaded from the server device 100 to the terminal 3 based on a contract with the provider operating the server device 100.

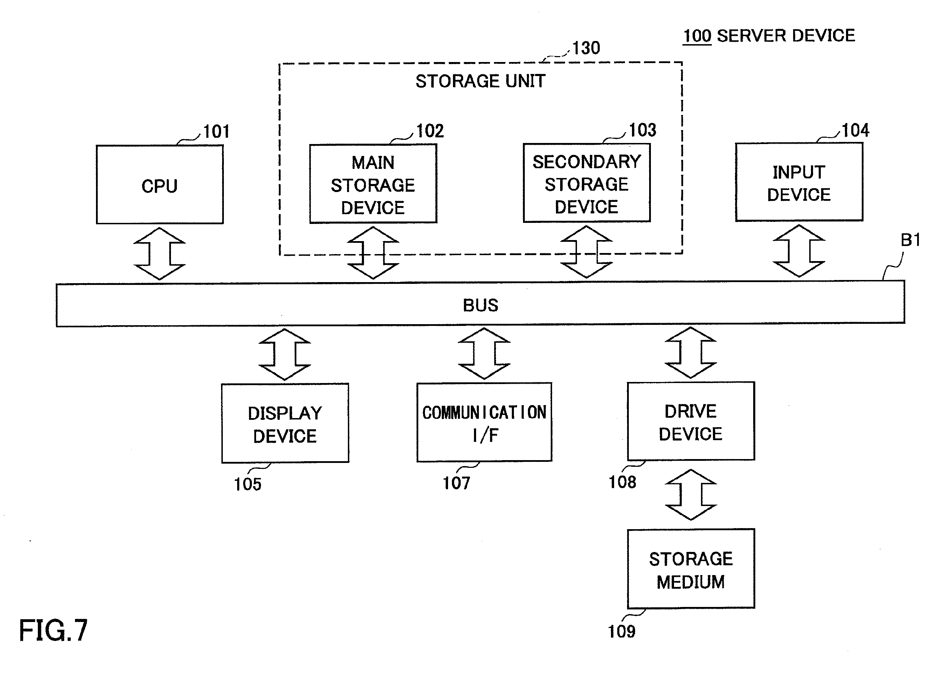

Next, the server device 100 according to the present embodiment has a hardware configuration as illustrated in FIG. 7. FIG. 7 illustrates a hardware configuration of the server device 100. As illustrated in FIG. 7, a server device 100 is a terminal controlled by a computer, and includes a CPU (Central Processing Unit) 101, a main storage device 102, a secondary storage device 103, an input device 104, a display device 105, a communication I/F (interface) 107, and a drive device 108, which are connected to a bus B1.

The CPU 101 is a processor for controlling the server device 100 according to programs stored in the main storage device 102. As the main storage device 102, a RAM (Random Access Memory) or a ROM (Read-Only Memory) is used, and the main storage device 102 stores or temporarily saves programs executed by the CPU 101, data needed for processes by the CPU 101, and data obtained by processes by the CPU 101.

As the secondary storage device 103, a HDD (Hard Disk Drive) is used, and the secondary storage device 103 stores data such as programs for executing various processes. As some of the programs stored in the secondary storage device 103 are loaded into the main storage device 102 and executed by the CPU 101, various processes are realized. A storage unit 130 includes the main storage device 102 and/or the secondary storage device 103.

The input device 104 includes a mouse and a keyboard, and is used by the user for inputting various kinds of information needed for processes performed by the server device 100. The display device 105 displays various kinds of information that are needed, according to control by the CPU 101. The communication I/F 107 performs communication through a wired or wireless network.

Programs for realizing processes performed by the server device 100 are provided to the server device 100 by, for example, a storage medium 109 such as a CD-ROM (Compact Disc Read-Only Memory). The drive device 108 acts as an interface between the storage medium 109 set in the drive device 108 and the server device 100.

Furthermore, the programs for realizing various processes according to the present embodiment described below are stored in the storage medium 109, and the programs stored in the storage medium 109 are installed in the server device 100 via the drive device 108. The installed programs are executable by the sever device 100.

Note that the medium for storing programs is not limited to a CD-ROM; any medium readable by a computer may be used. As a computer readable storage medium, a DVD disk, a portable recording medium such as a USB memory, and a semiconductor memory such as a flash memory may be used, other than a CD-ROM.

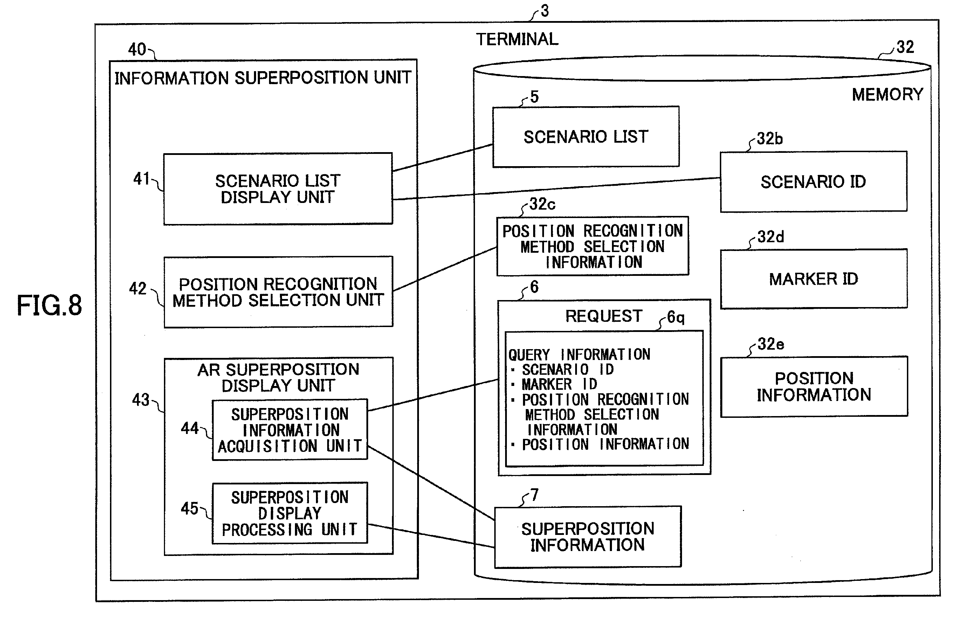

Next, a description is given of a functional configuration example. FIG. 8 illustrates a functional configuration example of the terminal 3. In FIG. 8, the terminal 3 includes an information superposition unit 40 for displaying the superposition information 7 downloaded from the server device 100, so as to be superposed on an image displayed on the display operation unit 33 of the terminal 3.

The information superposition unit 40 corresponds to an application for displaying the superposition information 7 provided from the server device 100, so as to be superposed on an image displayed on the display operation unit 33 of the terminal 3. The information superposition unit 40 includes a scenario list display unit 41, a position recognition method selection unit 42, and an AR superposition display unit 43.

The respective processing units of the scenario list display unit 41, the position recognition method selection unit 42, and the AR superposition display unit 43 are realized by processes that are performed as the CPU 31 executes corresponding programs.

Furthermore, all of or part of the information superposition unit 40 including these processing units 41 through 43 may be realized by hardware such as a circuit.

The memory 32 includes a scenario list 5, a scenario ID 32b, position recognition method selection information 32c, a request 6, a marker ID 32d, superposition information 7, and position information 32e.

The scenario list display unit 41 downloads the scenario list 5 from the server device 100, displays the scenario list 5 on the display operation unit 33, and prompts the user of the terminal 3 to select a scenario.

The scenario list 5 is data of a list including one or more scenario IDs for identifying scenarios provided by the server device 100, and the scenario names of the scenario IDS. On the display operation unit 33 of the terminal 3, the scenario names are displayed such that the user may select a scenario name.

When the user selects a scenario, the scenario ID of the selected scenario is stored in the memory 32.

The position recognition method selection unit 42 prompts the user to select a position recognition method corresponding to the status of the user. The user selects, as the position recognition method, any one of none, the indoor positioning device 1b, or the satellite GPS 1c. The position recognition method selection information 32c indicating the selected position recognition method is stored in the memory 32.

The AR superposition display unit 43 downloads the superposition information 7 from the server device 100, in response to detecting a marker MR in an image taken by the user with the terminal 3. The AR superposition display unit 43 further includes a superposition information acquisition unit 44 and a superposition display processing unit 45.

The superposition information acquisition unit 44 sends the request 6, and downloads the superposition information 7 from the server device 100. The superposition information 7 downloaded from the server device 100 is stored in the memory 32.

The superposition information acquisition unit 44 first creates query information 67q specifying the scenario ID 32b, the marker ID 32d, the position recognition method selection information 32c, and the position information stored in the memory 32.

As the position information of the query information 67q, the position information 32e is set. The position information 32e indicates the position information received from the indoor positioning device 1b or the satellite GPS 1c, among the position recognition methods indicated in the position recognition method selection information 32c.

The superposition display processing unit 45 displays the superposition information 7 on the display operation unit 33 when the downloading of the superposition information 7 from the server device 100 ends.

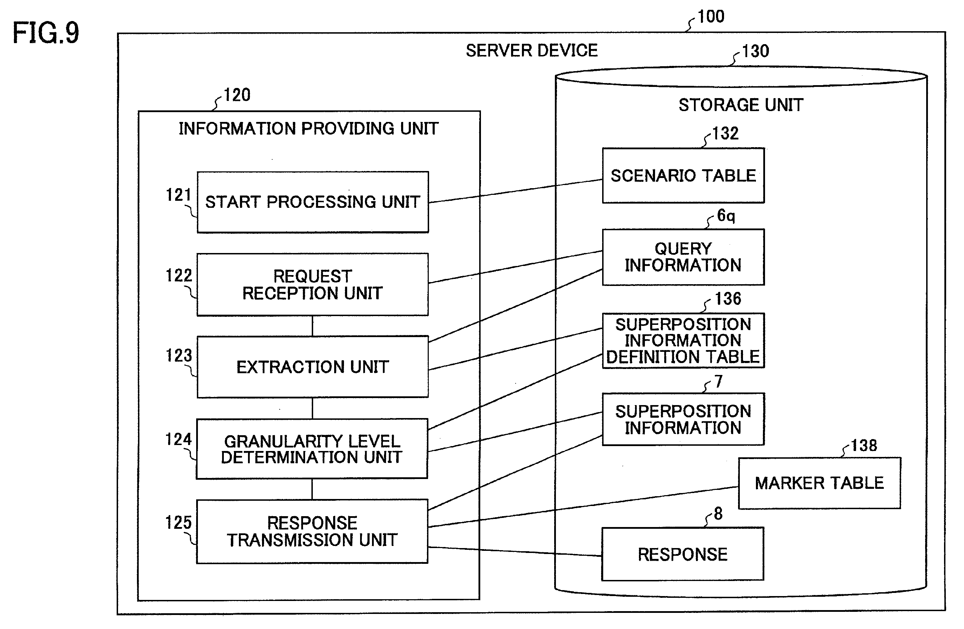

FIG. 9 illustrates a function configuration example of the server device 100. In FIG. 9, the server device 100 includes an information providing unit 120 for providing superposition information 7 corresponding to a scenario to the terminal 3.

In the present embodiment, the scenario indicates the providing range of the server device 100. For a single scenario, a plurality of markers MK are provided. For a single marker MK, a plurality of superposition information items 7 corresponding to the status of the user are provided. In the present embodiment, the user's statuses are the statuses A, B, and C described above (FIG. 1); however, the present embodiment is not so limited.

The information providing unit 120 includes a start processing unit 121, a request reception unit 122, an extraction unit 123, a granularity level determination unit 124, and a response transmission unit 125. The respective processing units of the start processing unit 121, the request reception unit 122, the extraction unit 123, the granularity level determination unit 124, and the response transmission unit 125 are realized by processes that are performed as the CPU 31 executes corresponding programs.

Furthermore, all of or part of the information providing unit 120 including these processing units 121 through 125 may be realized by hardware such as a circuit.

A storage unit 130 includes a scenario table 132, query information 6q, a superposition information definition table 136, a marker table 138, and superposition information 7.

The start processing unit 121 creates the scenario list 5 from the scenario table 132 in response to a request to acquire the scenario list 5 from the terminal 3, and sends the scenario list 5 to the terminal 3.

When the request 6 is received from the terminal 3, the request reception unit 122 acquires the query information 6q from the request 6. The query information 6q is stored in the storage unit 130.

The extraction unit 123 extracts a recording including the superposition information 7 to be provided to the terminal 3, from the superposition information definition table 136 based on the query information 6q.

The granularity level determination unit 124 acquires superposition information 7 of the granularity level corresponding to the position recognition method selection information included in the query information 6q, from the record extracted by the extraction unit 123. The extracted superposition information 7 is stored in the storage unit 130 as information of the granularity level corresponding to the status of the user.

The response transmission unit 125 creates a response 8 including the superposition information 7, and sends the response 8 to the terminal 3. That is to say, the response transmission unit 125 causes the terminal 3 to download the superposition information 7 from the server device 100.

When sending the response 8, the response transmission unit 125 may determine whether the terminal 3 is located within a certain distance from the marker MK, based on the position where the marker MK is arranged and the present position of the terminal 3. In this case, the marker table 138 is prepared, in which the marker ID and the position information indicating where the marker MK is arranged are associated with each other, and the marker table 138 is stored in the storage unit 130.

When the response transmission unit 125 determines that the terminal 3 is located within a certain distance from the marker MK, with reference to the marker table 138, the response transmission unit 125 controls the sending of the response 8 to provide the superposition information 7. Meanwhile, when the response transmission unit 125 determines that the terminal 3 is located outside the certain distance from the marker MK, the response transmission unit 125 is to send a response 8 that does not include the superposition information 7.

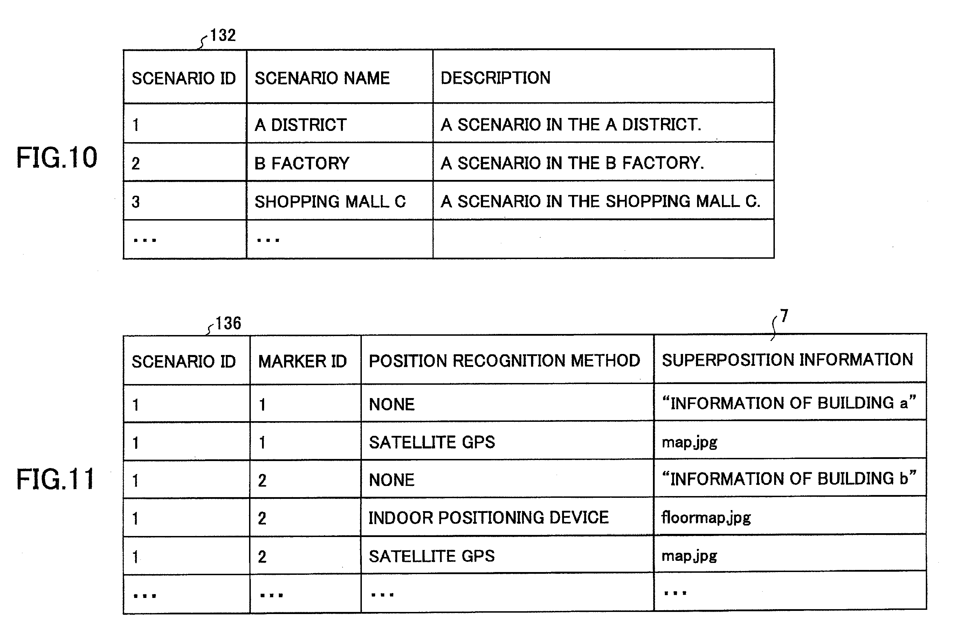

Next, a description is given of a data configuration example of the scenario table 132 and the superposition information definition table 136, managed by the server device 100. FIG. 10 illustrates a data configuration example of the scenario table 132. In FIG. 10, the scenario table 132 is a table storing the scenario and information relevant to the scenario in association with each other, and includes items such as the scenario ID, the scenario name, and a description.

The scenario ID is an ID for identifying the scenario. The scenario name is the name of the scenario. The description indicates an overview of the scenario, and indicates the providing range of the server device 100. The scenario name of the scenario ID "1" is "A district", and a description is given as "a scenario in the A district". The same applies to the other scenarios.

FIG. 11 illustrates a data configuration example of the superposition information definition table 136. In FIG. 11, the superposition information definition table 136 is a table storing the superposition information 7 in association with the position recognition method, for each combination of the scenario ID and marker ID. The superposition information definition table 136 includes items such as the scenario ID, the marker ID, the position recognition method, and the superposition information 7.

The scenario ID is an ID for identifying the scenario. The marker ID is an ID for identifying the marker MK. The position recognition method indicates the position recognition method that is to be provided. The position recognition method indicates "none", "indoor positioning device", and "satellite GPS". For one combination of the scenario ID and the marker ID, one or more position recognition methods are indicated. The superposition information 7 is information to be provided to the terminal 3, and includes images and text. The superposition information 7 is not limited to images and text.

For the combination of scenario ID "1" and marker ID "1", the superposition information 7 is associated with two position recognition methods. In the case of "none", a text "information of building a" is provided as the superposition information 7 to the terminal 3. In the case of "satellite GPS", an image file "map.jpg" is provided as the superposition information 7 to the terminal 3.

In the superposition information definition table 136 illustrated in FIG. 11, for the combination of scenario ID "1" and marker ID "2", the superposition information 7 is associated with three position recognition methods. In the case of "none", a text "information of building b" is provided as the superposition information 7 to the terminal 3. In the case of "indoor positioning device", an image file "floormap.jpg" is provided as the superposition information 7 to the terminal 3. In the case of "satellite GPS", an image file "map.jpg" is provided as the superposition information 7 to the terminal 3.

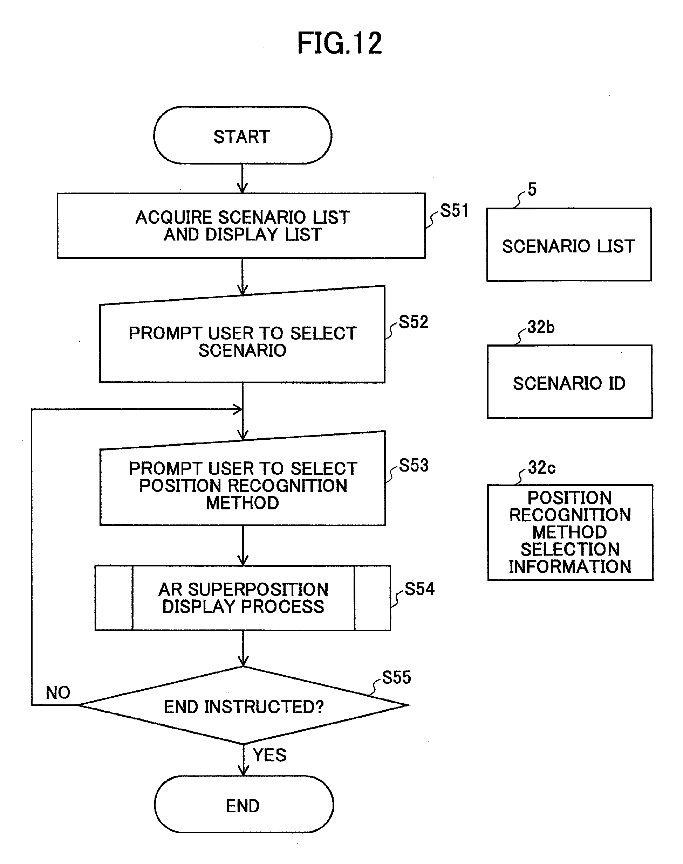

In the following, an information superposition process by the terminal 3 and an information providing process by the server device 100 are described with reference to flowcharts. FIG. 12 is a flowchart of the information superposition process performed by the terminal 3. In FIG. 12, when the information superposition unit 40 of the terminal 3 is activated according to the user's operation, the scenario list display unit 41 of the information superposition unit 40 acquires the scenario list 5 from the server device 100 (step S51).

The scenario list display unit 41 displays the scenario list 5 acquired from the server device 100 on the display operation unit 33, and prompts the user to make a selection (step S52). The user selects a desired scenario from the scenario list 5 displayed on the display operation unit 33. The scenario ID 32b identifying the scenario selected by the user is stored in the memory 32.

When the scenario ID 32b is stored in the memory 32, the position recognition method selection unit 42 displays a screen in which the position recognition method may be selected on the display operation unit 33, and prompts the user to select a position recognition method (step S53). When the position recognition method selection unit 42 acquires the position recognition method selection information 32c desired by the user, the position recognition method selection unit 42 stores the position recognition method selection information 32c in the memory 32.

Subsequently, the AR superposition display unit 43 performs an AR superposition display process (step S54). When the AR superposition display process is completed, the information superposition unit 40 determines whether an end instruction is received from the user (step S55). The end instruction is the termination of the application by the user.

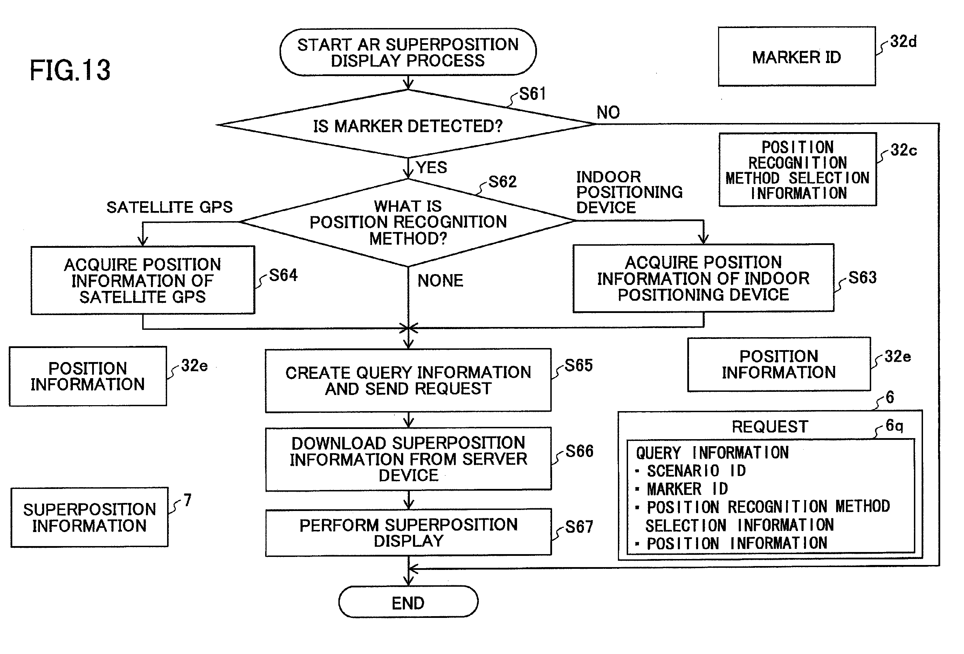

FIG. 13 is a flowchart of the AR superposition display process performed by the AR superposition display unit 43. In FIG. 13, the AR superposition display unit 43 determines whether a marker MR has been detected (step S61). When a marker MR is not detected, the AR superposition display unit 43 ends the AR superposition display process.

When a marker MR is detected, the AR superposition display unit 43 reads the marker ID 32d from the marker MR and stores the marker ID 32d in the memory 32, and then refers to the position recognition method selection information 32c stored in the memory 32 and identifies the position recognition method selected by the user (step S62).

When the position recognition method selection information 32c indicates "none", the AR superposition display unit 43 proceeds to step S63. When the position recognition method selection information 32c indicates "indoor positioning device", the AR superposition display unit 43 acquires position information 32e indicating the position information of the indoor positioning device from the memory 32, and proceeds to step S65. When the position recognition method selection information 32c indicates "satellite GPS", the AR superposition display unit 43 acquires position information 32e indicating the position information of the satellite GPS from the memory 32, and proceeds to step S65.

The AR superposition display unit 43 uses the scenario ID 32b, the marker ID 32d, the position recognition method selection information 32c, and the position information 32e in the memory 32 to create the query information 6q for searching for the superposition information 7, and sends the request 6 including the created query information 6q to the server device 100 (step S65).

The AR superposition display unit 43 downloads the superposition information 7, by receiving, from the server device 100, a response 8 corresponding to the request 6 (step S66). Then, the AR superposition display unit 43 displays the superposition information 7 (step S67), and ends the AR superposition display process.

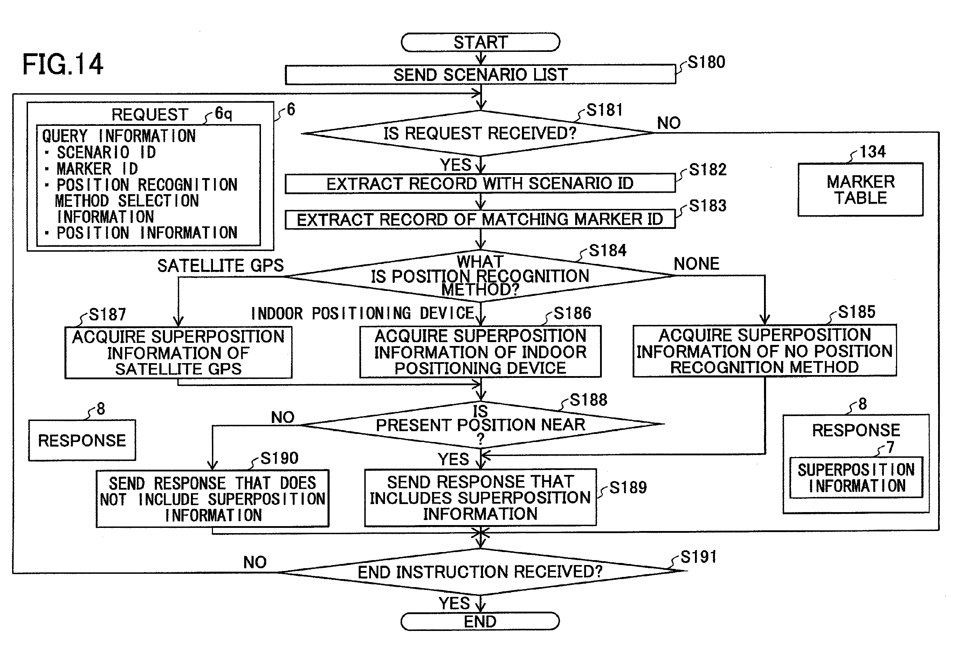

FIG. 14 is a flowchart of an information providing process performed by the server device 100. In FIG. 14, the information providing unit 120 of the server device 100 starts the information providing process when activated. When a request for the scenario list 5 is received from the terminal 3, in the information providing unit 120, the start processing unit 121 creates the scenario list 5 based on the scenario table 132 and sends the scenario list 5 to the terminal 3 (step S180).

Subsequently, the request reception unit 122 determines whether the request 6 has been received (step S181). When the request reception unit 122 determines that the request 6 has not been received, the information providing unit 120 proceeds to step S191.

When the request reception unit 122 determines that the request 6 has been received, the extraction unit 123 uses the scenario ID of the query information 6q included in the request 6 to extract a record from the marker table 134 (step S182). Furthermore, the extraction unit 123 extracts a record matching the marker ID of the query information 6q, from among the records extracted by the scenario ID (step S183).

When a record that matches the marker ID of the query information 6q is extracted, the granularity level determination unit 124 determines which position recognition method is specified by the query information 6q (step S184).

In step S184, when the position recognition method of the query information 6q is indicating "none", the granularity level determination unit 124 acquires the superposition information 7 for the position recognition method "none", from the record matching the marker ID of the query information 6q (step S185). Subsequently, the response transmission unit 125 sends a response 8 including the superposition information 7, to the terminal 3 (step S189).

In step S184, when the position recognition method of the query information 6q is indicating "indoor positioning device", the granularity level determination unit 124 acquires the superposition information 7 for the position recognition method "indoor positioning device", from the record matching the marker ID of the query information 6q (step S186).

Subsequently, the response transmission unit 125 determines whether the present position of the terminal 3 is near the marker MK (step S188). That is to say, the response transmission unit 125 determines whether the position information of the query information 6q is within a certain distance from the position information of the marker MK of the marker ID. When the position information of the query information 6q is within a certain distance, the response transmission unit 125 determines that the terminal 3 is near the marker MK. When the position information of the query information 6q is outside a certain distance, the response transmission unit 125 determines that the terminal 3 is not near the marker MK. The position information of the marker MK is to be managed in association with the marker ID of the marker MK, and the position information of the marker MK is to be acquired.

When the response transmission unit 125 determines that the terminal 3 is near the marker MK, the response transmission unit 125 sends a response 8 including the superposition information 7, to the terminal 3 (step S189). When the response transmission unit 125 determines that the terminal 3 is not near the marker MK, the response transmission unit 125 sends a response 8 that does not include the superposition information 7, to the terminal 3 (step S190).

In step S184, when the when the position recognition method of the query information 6q is indicating "satellite GPS", the granularity level determination unit 124 acquires the superposition information 7 for the position recognition method "satellite GPS", from the record matching the marker ID of the query information 6q (step S187).

Then, after the processes of steps S188 through 190 described above are performed, the response transmission unit 125 sends a response 8 including the superposition information 7 to the terminal 3 (step S189).

When the response 8 is sent, the information providing unit 120 determines whether an end instruction has been received from the terminal 3 (step S191). When an end instruction has not been received from the terminal 3, the information providing unit 120 returns to step S181, and repeats the processes described above, starting from the process by the request reception unit 122. On the other hand, when an end instruction has been received from the terminal 3, the information providing unit 120 ends this information providing process.

Next, a description is given of an example where different superposition information items 7 are displayed according to the status of the user, even when an image including the same marker MK is taken.

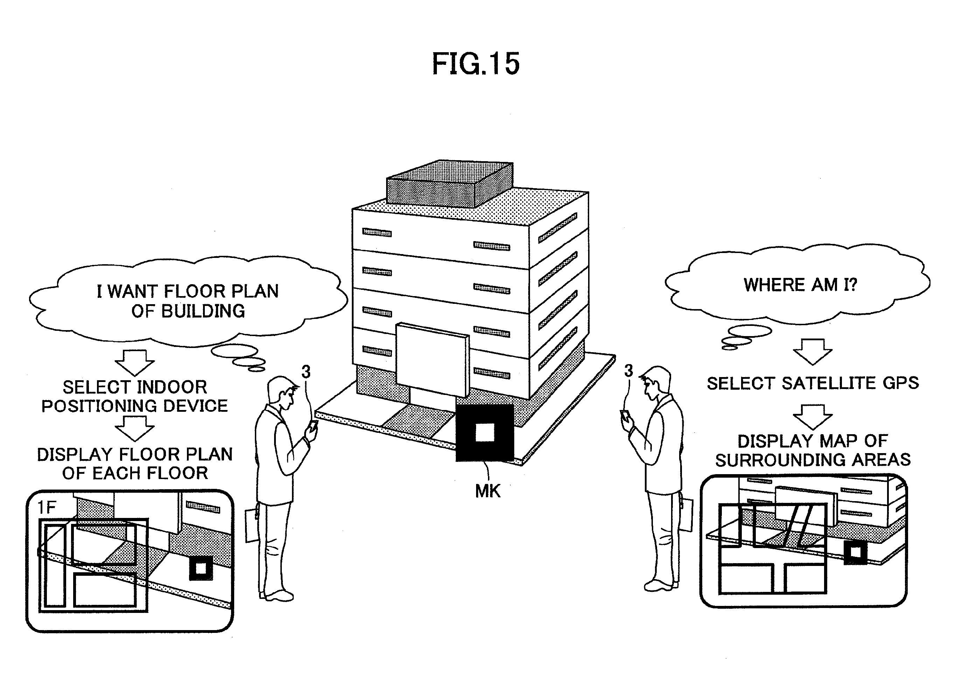

FIG. 15 illustrates an example of a case where a marker at the entrance of a building is detected. In FIG. 15, in the present embodiment, when a user who wants a floor map of a building takes an image including a marker MK at the entrance of a building with the terminal 3, a floor map of the first floor of the building is displayed on the screen of the display operation unit 33 of the terminal 3, so as to be superposed on the image that has been taken.

In order to acquire the desired superposition information 7, the user selects the position recognition method "indoor positioning device" from the display operation unit 33. Accordingly, the user is able to acquire the superposition information 7 indicating the floor map of the first floor of the building, based on the position information of the user and a marker ID of the marker MK.

In FIG. 15, in the present embodiment, when a user who has become lost takes an image including a marker MK at the entrance of a building with the terminal 3, on the screen of the display operation unit 33 of the terminal 3, a map of surrounding areas according to the position of the user is displayed so as to be superposed on the image that has been taken.

In order to acquire the desired superposition information 7, the user selects the position recognition method "satellite GPS" from the display operation unit 33. Accordingly, the user is able to acquire the superposition information 7 indicating a map of surrounding areas, based on the position information of the user and a marker ID of the marker MK.

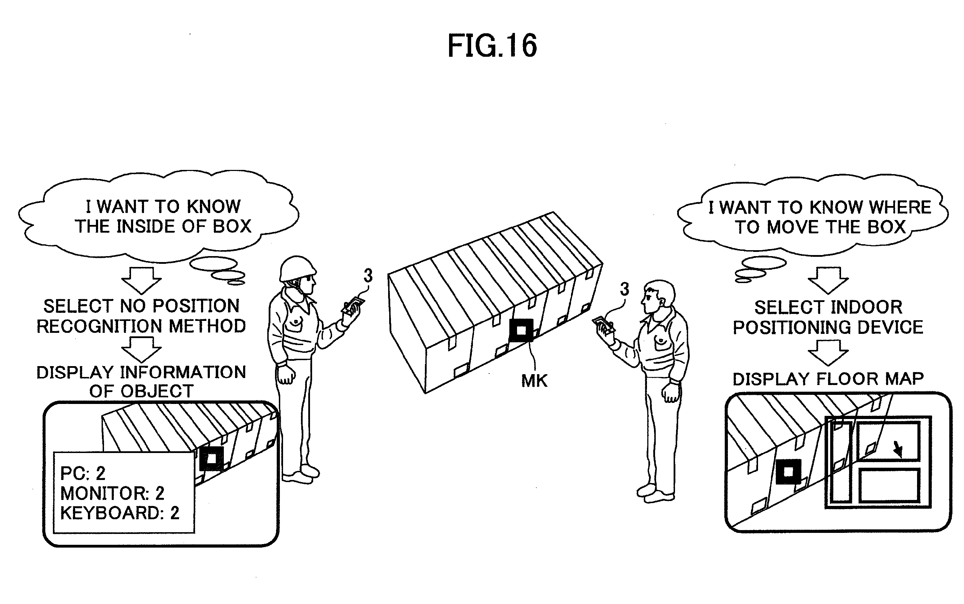

FIG. 16 illustrates an example of a case where a marker attached to a box is detected. In FIG. 16, in the present embodiment, when a user who wants to know what is inside the box takes an image including the marker MK attached to the box with the terminal 3, on the screen of the display operation unit 33 of the terminal 3, information relevant to the inside of the box is displayed on the screen of the display operation unit 33 of the terminal 3, so as to be superposed on the image that has been taken.

In order to acquire the desired superposition information 7, the user selects the position recognition method "none" from the display operation unit 33. Accordingly, the user is able to acquire the superposition information 7 indicating the inside of the box, based on a marker ID of the marker MK.

In FIG. 16, in the present embodiment, when a user who wants to know where to move the box takes an image including the marker MK attached to the box with the terminal 3, on the screen of the display operation unit 33 of the terminal 3, a floor map indicating the location to which the box is to be moved is displayed on the screen of the display operation unit 33 of the terminal 3, so as to be superposed on the image that has been taken.

In order to acquire the desired superposition information 7, the user selects the position recognition method "indoor positioning device" from the display operation unit 33. Accordingly, the user is able to acquire the superposition information 7 (floor map) indicating the location to which the box is to be moved, based on a marker ID of the marker MK.

As described above, in the present embodiment, even when an image of the same marker MK is taken, different superposition information items 7 are provided according to the status of the user. Furthermore, there is no need to store, in the terminal 3, different superposition information items 7 according to a plurality of statuses in advance, and therefore the storage area of the memory 32 in the terminal 3 is not wasted.

The present invention is not limited to the specific embodiments described herein, and variations and modifications may be made without departing from the spirit and scope of the present invention.

According to an aspect of the embodiments, information is provided in accordance with the user's status, even for the same reference object.

## Claims

1. An information providing device (FIGS. 5, 9, 11, 14) comprising:
a storage device (130) configured to store display information (7, 7a, 7b, 7c) associated with identification information for identifying a reference object (MK); and
an information providing unit (120) configured to
receive, from a terminal (3), a request (6) including the identification information and information on position recognition (1b, 1c), and
cause the terminal (3) to download, from the storage device, display information (7) identified by the information on position recognition (1b, 1c) specified in the request, from among display information corresponding to the identification information specified in the request, in response to receiving the request.

2. The information providing device (FIGS. 5, 14) according to claim 1, wherein
the display information (7) identified by the information on position recognition is identified according to position precision obtained from the information on position recognition.

3. The information providing device (FIGS. 5, 14) according to claim 2, wherein
the information on position recognition specifies any one of no position recognition method, indoor positioning device (1b), and satellite GPS (1c).

4. The information providing device (FIGS. 1 through 5) according to claim 2 or 3, wherein
the information providing unit (120) is further configured to identify a display object of an allowable size set in accordance with the information on position recognition (1b, 1c).

5. The information providing device (FIGS. 1 through 5) according to claim 4, wherein
the allowable size increases in an order of the no position recognition method, the indoor positioning device (1b), and the satellite GPS (1c).

6. The information providing device (FIGS. 5, 9, 11, 14) according to claim 5, wherein
the information providing unit (120) includes
an extraction unit (123) configured to extract, from the storage device (130), a record matching the identification information specified in the request (6), and
a granularity level determination unit (124) configured to select the display information (7) from the record extracted by the extraction unit (123), by determining a granularity level of the information on position recognition (1b, 1c) specified in the request (6).

7. The information providing device (FIG. 14) according to claim 1, wherein
the information providing unit (120) includes
a response sending unit (125) configured to send, to the terminal (3) in response (8) to the request (6), display information (7) of an allowable size based on the information on position recognition specified in the request, when the terminal (3) is located within a predetermined distance from a position of a reference object (MK) identified by the identification information specified in the request.

8. A non-transitory computer-readable recording medium storing an information providing program that causes a computer to execute a process, the process comprising (FIGS. 5, 9, 11, 14):
receiving, from a terminal (3), a request (6) including identification information for identifying a reference object and information on position recognition (1b, 1c); and
causing the terminal (3) to download display information (7) identified by the information on position recognition (1b, 1c) specified in the request (6), from among display information (7) corresponding to the identification information specified in the request (6).

9. An information providing system (FIGS. 5, 9, 11, 14) comprising:
a terminal (3); and
a server device (100) configured to provide display information (7) to the terminal (3), wherein
the server device (100)
receives, from the terminal (3), a request (6) including identification information for identifying a reference object and information on position recognition (1b, 1c); and
causes the terminal (3) to download display information (7) identified by the information on position recognition (1b, 1c) specified in the request, from among display information (7) corresponding to the identification information specified in the request (6), and wherein
the terminal (3)
sends, to the server device (100), the request (6) specifying the identification information acquired by detecting a reference object (MK) and the information on position recognition (1b, 1c) relevant to position precision of the terminal (3), and
downloads, from the server device (100), the display information (7) of an allowable size based on the information on position recognition (1b, 1c).
